(19) Europäisches Patentamt
European Patent Office
Office européen des brevets

(11) **EP 2 854 463 A1**

(12) **EUROPEAN PATENT APPLICATION**

(43) Date of publication:
**01.04.2015 Bulletin 2015/14**

(51) Int Cl.:
***H04W 64/00*** *(2009.01)*    ***G01S 5/04*** *(2006.01)*

(21) Application number: **13306345.3**

(22) Date of filing: **30.09.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Bune, Paulus
70435 Stuttgart (DE)**
• **Dillenburger, Martin
70435 Stuttgart (DE)**
• **Schoen, Helmut
70435 Stuttgart (DE)**

(74) Representative: **Hofmann, Dirk et al
Alcatel-Lucent Deutschland AG
Intellectual Property Business Group
Lorenzstrasse 10
70435 Stuttgart (DE)**

(54) **Position finding apparatus for a mobile station, vehicle, method, and computer program thereof**

(57)    The embodiments of the invention relate to a position finding apparatus (PFA) for locating a mobile station (MS). The position finding apparatus (PFA) contains a multiple antenna system for receiving at least one radio frequency signal from the mobile station (MS), means for determining at a first position (MS-POS) of the position finding apparatus (PFA) a position (MS-POS) of the mobile station (MS) by determining at least two spatial parameters of a spatial relationship between the position finding apparatus (PFA) and the mobile station (MS), and means for transmitting information of the position (MS-POS) of the mobile station (MS) to at least one remote device and/or means for displaying the position (MS-POS) of the mobile station (MS) in reference to a visual presentation of an environment surrounding the position (MS-POS) of the mobile station (MS). The embodiments of the invention even further relate to a vehicle, which contains the position finding apparatus, to a method for locating the mobile station (MS), and to a computer program having a program code for performing the method.

FIG. 2

Description

FIELD OF THE INVENTION

The present invention relates to searching for mobile stations of missed persons and, more particularly but not exclusively, to determining and displaying a position of their mobile stations.

BACKGROUND

This section introduces aspects that may be helpful in facilitating a better understanding of the invention. Accordingly, the statements of this section are to be read in this light and are not to be understood as admission about what is in the prior art.

A receiving direction of uplink signals, which are transmitted from a mobile station to a base station of a radio communication system, can be detected by applying an antenna array at a receiving apparatus for such uplink signals. When measuring the receiving direction at two or more different locations of the receiving apparatus, a location of the mobile station can be determined by triangulation. Depending on local circumstances a measurement at two locations, which are sufficiently distant from each other, may not be always possible.

A radio cell, in which a mobile station is located, can be determined by utilizing so-called location based services. Due to sizes of such radio cells especially in rural areas, a search area for a rescue team may be too large for being successful for locating the mobile station of the person with sufficient accuracy in a fast way.

SUMMARY

Existing methods for locating mobile stations are either too time consuming, too complex, not always applicable or too imprecise. Thus, an object of the embodiments of the invention is to overcome these obstacles and to optimize existing localization devices and existing localization methods for determining a whereabouts of a mobile station in case of an emergency.

The object is achieved by a position finding apparatus for locating a mobile station. The position finding apparatus contains a multiple antenna system for receiving at least one radio frequency signal from the mobile station. The position finding apparatus further contains means for determining at a first position of the position finding apparatus a position of the mobile station by determining at least two spatial parameters of a spatial relationship between the position finding apparatus and the mobile station. The position finding apparatus further contains means for transmitting information of the position of the mobile station to at least one remote device and/or means for displaying the position of the mobile station in reference to a visual presentation of an environment surrounding the position of the mobile station.

In embodiments, the means for determining the position of the mobile station may correspond to any determination unit, determining unit etc. Hence, in embodiments the means for determining the position of the mobile station may contain an input or several inputs for obtaining position data of the position finding apparatus, alignment or orientation data of the multiple antenna system and measurement data of the at least one radio frequency signal, an algorithm, which determines the position of the mobile station, and an output for information about the position of the mobile station. In some embodiments the means for determining the position of the mobile station can be implemented in terms of a computer program and a hardware component on which the computer program is executed, such as a DSP (DSP = Digital Signal Processor), an ASIC (ASIC = Application-Specific Integrated Circuit), an FPGA (FPGA = Field-Programmable Gate Array) or any other processor.

In embodiments, the means for transmitting information of the position of the mobile station may correspond to any combination of a radio transmitter, a radio transceiver etc. with an antenna system, which may be the multiple antenna system or an additional antenna system. Hence, in embodiments the means for transmitting information of the position of the mobile station may contain an input for the information about the position of the mobile station, processing units for generating and modulating a radio frequency signal with the information about the position of the mobile station, and the antenna system for transmitting the radio frequency signal. In some embodiments the means for transmitting information of the position of the mobile station can be implemented partly in terms of a computer program and a hardware component on which the computer program is executed, such as a DSP, an ASIC, an FPGA or any other processor.

In embodiments, the means for displaying the position of the mobile station may correspond to any displaying unit such as a monitor, a video projector, a smartphone display etc. Hence, in embodiments the means for displaying the position of the mobile station may contain an input for the information about the position of the mobile station, processing units for an overlap of the visual presentation of the environment surrounding the position of the mobile station with the position of the mobile station, and an issuing apparatus such as a display or a projector image. In some embodiments the means for displaying the position of the mobile station can be implemented partly in terms of a computer program and a hardware component on which the computer program is executed, such as a DSP, an ASIC, an FPGA or any other processor.

The object is further achieved by a vehicle, which contains a position finding apparatus. The vehicle may be for example a helicopter, an unmanned aerial vehicle, a boat, a car or a motorcycle.

The object is further achieved by a method for locating a mobile station by a position finding apparatus. The method contains the step of receiving by a multiple antenna system at least one radio frequency signal from the mobile station. The method further contains the step of determining at a first position of the position finding apparatus a position of the mobile station by determining at least two spatial parameters of a spatial relationship between the position finding apparatus and the mobile station. The method further contains the step of transmitting information of the position of the mobile station to at least one remote device and/or displaying the position of the mobile station in reference to a visual presentation of an environment surrounding the position of the mobile station.

The object is even further achieved by a computer program having a program code for performing the method, when the computer program is executed on a computer or processor.

The embodiments of the invention provide an advantage of obtaining the position of the mobile station by a measurement at a single location of the position finding apparatus. Thus, for determining the position of the mobile station it is not required to move the position finding apparatus to a second location for making a second measurement as it is required for triangulation. The embodiments provide a further advantage of immediately displaying the position of the mobile station to personal such as a rescue team, who operates the position finding apparatus.

In one embodiment, the position finding apparatus further contains means for imitating a radio communication system and for performing a registration procedure between the imitated radio communication system and the mobile station and the received at least one radio frequency signal is obtained by the registration procedure.

In embodiments, the means for imitating the radio communication system and for performing the registration procedure may correspond to any imitation unit, simulation unit etc. Hence, in embodiments the means for imitating the radio communication system and for performing the registration procedure may contain an input for receiving a command to start the network imitation or network simulation, an algorithm, which controls a radio interface of the position finding apparatus to simulate a base station and which executes network functions of other network nodes of the radio communication system such as a visitor location register. In some embodiments the means for imitating the radio communication system and for performing the registration procedure can be implemented in terms of a computer program and a hardware component on which the computer program is executed, such as a DSP, an ASIC, an FPGA or any other processor.

The functionality for imitating the radio communication system and for performing the registration procedure allows triggering the mobile station to transmit radio frequency signals, which can be measured by the position finding apparatus for determining the position of the mobile station.

In a further embodiment, the position finding apparatus may further contain means for scanning for radio transmissions by at least one radio communication system at the position of the position finding apparatus and the means for imitating the radio communication system and for performing the registration procedure are adapted to perform the registration procedure in an unused frequency range of the radio transmissions by the at least one radio communication system.

In embodiments, the means for scanning for the radio transmissions may correspond to any combination of a radio receiver, a radio transceiver etc. with an antenna system, which may be the multiple antenna system or an additional antenna system. Hence, in embodiments the means for scanning for the radio transmissions may contain at least one receiving antenna, an algorithm for detecting any radio transmissions received by the at least one receiving antenna within a predefined frequency range, and an output for the scanning result. In some embodiments the means for scanning for the radio transmissions can be implemented partly in terms of a computer program and a hardware component on which the computer program is executed, such as a DSP, an ASIC, an FPGA or any other processor.

The further embodiment allows the position finding apparatus to work in an area, which is served by at least one cellular radio communication system without disturbing the at least one cellular radio communication system.

In one preferred embodiment, the means for determining the position of the mobile station are adapted to determine by a first measurement an azimuth angle between a receive direction of the radio frequency signals and a predefined direction or a predefined plane and by a second measurement an elevation angle between the receive direction of the radio frequency signals and a further predefined direction or a further predefined plane and the at least two spatial parameters are the azimuth angle and the elevation angle. Thereby, the determination of the position of the mobile station at the first position of the position finding apparatus is completely based on angular measurements.

For enabling the angular measurements, the multiple antenna system may for example contain a single antenna array rotatable to a first plane, which contains at least two antenna elements of the antenna array and rotatable to a second plane, which contains the at least two antenna elements of the antenna array and which is different to the first plane. An angle between the first plane and the second plane may be between 75 and 105 angular degrees and preferably may be 90 angular degrees.

Alternatively, the multiple antenna system may contain a first antenna array, which contains antenna elements in a first plane, and may contain a second antenna array, which contains further antenna elements in a second plane, which is different to the first plane. An angle between the first plane and the second plane may be between 75 and 105 angular degrees and preferably may be 90 angular degrees.

When the position of the mobile station is determined by the azimuth angle and the elevation angle, preferably the visual presentation may be a video image and the position of the mobile station is indicated by a marker in the video image.

In a further preferred embodiment, the multiple antenna system may be adapted to determine by a first measurement an azimuth angle between a receive direction of the radio frequency signals and a predefined direction and by a second measurement a distance between the position finding apparatus and the mobile station. In such a case, the at least two spatial parameters may be the azimuth angle and the distance.

Preferably, the means for determining the position of the mobile station may be adapted to determine the position of the mobile station based on an extrapolation of an arrival time of the position finding apparatus at the position of the mobile station.

When the position of the mobile station is determined by the azimuth angle and the distance, preferably the visual presentation may be a digital map and the position of the mobile station may be indicated by a marker in the digital map.

In an even further embodiment, the means for determining the position of the mobile station may be adapted to determine at least a second position of the mobile station with respect to at least a second position of the position finding apparatus. In such a case a more precise position of the mobile station may be determined by an intersection point of a first vector from the first position of the position finding apparatus to the position of the mobile station and of at least a second vector from the at least second position of the position finding apparatus to the at least second position of the mobile station.

In a further preferred embodiment, the position finding apparatus may further contain means for identifying a user of the mobile station and/or may further contain means for contacting the user of the mobile station.

In embodiments, the means for identifying the user of the mobile station may correspond to any identifying unit, identifying module etc. Hence, in embodiments the means for identifying the user of the mobile station may contain a database, an algorithm for identifying the user by a database query, and an output for information about the identity of the user. In some embodiments the means for identifying the user of the mobile station can be implemented partly in terms of a computer program and a hardware component on which the computer program is executed, such as a DSP, an ASIC, an FPGA or any other processor.

In embodiments, the means for contacting the user of the mobile station may correspond to any contacting unit, contacting module etc. Hence, in embodiments the means for contacting the user of the mobile station may contain a user interface such as a telephone or hand-free equipment, an algorithm for getting an identification of the mobile station of the user, and functions for establishing a data connection or a circuit-switched connection with the mobile station. In some embodiments the means for contacting the user of the mobile station can be implemented partly in terms of a computer program and a hardware component on which the computer program is executed, such as a DSP, an ASIC, an FPGA or any other processor.

Further advantageous features of the embodiments of the invention are defined and are described in the following detailed description.

## BRIEF DESCRIPTION OF THE FIGURES

The embodiments of the invention will become apparent in the following detailed description and will be illustrated by accompanying figures given by way of non-limiting illustrations.

Figure 1 shows exemplarily a positioning scenario for a search and a determination of a position of a mobile station of a missed or searched person by use of a position finding apparatus, which is located in a vehicle.

Figure 2 shows schematically a determination of the position of the mobile station with the help of two spatial parameters of a spatial relationship between the position finding apparatus and the mobile station according to a first embodiment.

Figure 3 shows schematically angles and directions of a receive direction of radio frequency signals transmitted by the mobile station and of a reference direction with respect to a linear orientation and arrangement of antenna elements of an antenna system connected to the position finding apparatus.

Figure 4 shows schematically a determination of the position of the mobile station with the help of two spatial parameters of a spatial relationship between the position finding apparatus and the mobile station according to a second embodiment.

Figure 5 shows schematically an indication of the position of the mobile station with respect to a digital street map according to a first embodiment and an indication of the position of the mobile station with respect to a video image according to a second embodiment.

Figure 6 shows schematically a determination of the position of the mobile station by applying additionally a triangulation from at least two different locations of the position finding apparatus according to a further embodiment.

Figure 7 shows schematically a determination of the position of the mobile station by applying a weighted averaging of several meaured positions of the mobile station according to an even further embodiment.

Figure 8 shows a graph/diagram for a measurement procedure of a timing advance parameter as a function of time and an extrapolation for an arrival time at the position of the mobile station according to an additional embodiment.

Figure 9 shows schematically and exemplarily a block diagram of a process flow of a positioning method executed by the position finding apparatus for determining the position of the mobile station.

Figure 10 shows schematically and exemplarily a block diagram of the position finding apparatus with processing units and interfaces between the processing units for determining the position of the mobile station.

## DESCRIPTION OF THE EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

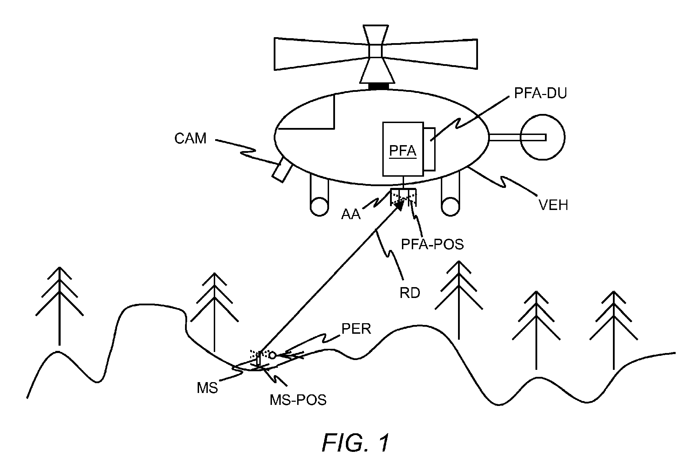

Figure 1 shows schematically a block diagram of a vehicle VEH being used for localizing one mobile station MS or several mobile stations. A splitting of processing functions across processing units of the vehicle VEH shown in Figure 1 is not critical, and as can be understood by those skilled in the art that the number of processing units, the number of processing functions and an allocation of the processing functions to the processing units may vary without departing from the scope of the embodiments of the invention as defined in the appended claims.

The term "mobile station" may be considered synonymous to, and may hereafter be occasionally referred to, as a mobile unit, mobile user, access terminal, user equipment, subscriber, user, remote station etc. The mobile station MS may be for example a cellular telephone, a smart phone, a portable computer, a pocket computer, a hand-held computer, a personal digital assistant or a car-mounted mobile device.

The vehicle VEH is shown as a helicopter. In a further embodiment, the vehicle VEH may be a so-called UAV (UAV = unmanned aerial vehicle), which is remotely navigated. According to even further embodiments, the vehicle VEH may be a car, a boat, a motorcycle etc.

As shown in Figure 1 a person PER as a user of the mobile station MS may be in a dangerous situation and may be not able to get out of the situation by himself or herself. The person PER may have tumbled awkwardly, may have fallen into a crevasse, may have buried by an avalanche or by a collapsed building or may have been kidnapped.

The person may be situated in a local area without coverage by a cellular radio communication system. This means that either no cellular radio communication system has been installed in the local area or the local area may be geographically arranged with respect to a base station of the cellular radio communication system in such a way (e.g. local area is a crevasse or a cave or the local area is covered by snow due to an avalanche), that no radio communication between the mobile station and the base station can be executed.

The term "base station" may be considered synonymous to and/or referred to as a base transceiver station, access point base station, access point, macro base station, micro base station, femto base station, pico base station etc. and may describe equipment that provides wireless connectivity via one or more radio links to one or more mobile stations.

The vehicle VEH may contain a position finding apparatus PFA and an antenna array AA, which is connected to the position finding apparatus PFA. The antenna array AA is preferably located outside the vehicle VEH. Alternatively, the antenna array AA may be located inside the vehicle VEH, when a casing of the vehicle VEH allows a propagation of downlink radio frequency signals from the position finding apparatus PFA to the mobile station MS and a propagation of uplink radio frequency signals from the mobile station MS to the position finding apparatus PFA with sufficient power levels for a detection and processing of the downlink radio frequency signals at the mobile station and a detection and processing of the uplink radio frequency signals at the position finding apparatus PFA.

The antenna array AA preferably contains four antenna elements. Alternatively, the antenna array AA may contain only two or three antenna elements or more than four antenna elements such as eight antenna elements.

In a first embodiment, the antenna array AA may be a two-dimensional antenna array with all antenna elements being arranged in a fixed single plane (first type of antenna array AA).

According to a second embodiment, the antenna array AA may contain at least one rotatable part for rotating the antenna elements from a first position, which defines a first plane for the antenna elements, to a second position, which defines a second plane for the antenna elements (second type of antenna array AA). An angular degree between the first plane and the second plane may be preferably exactly 90 degree, approximately 90 degree or in a range between 75 degree and 105 degree.

According a third embodiment, the antenna array AA may contain a first group of antenna elements being arranged in the first plane and may contain a second group of antenna elements being arranged in the second plane and the angular degree between the first plane and the second plane may be preferably exactly 90 degree, approximately 90 degree or in a range between 75 degree and 105 degree (third type of antenna array AA).

According to a fourth embodiment, the vehicle VEH may contain a further antenna array with two, three, four or even more antenna elements (the further antenna array is not shown in Figure 1 for simplification). With respect to the fourth embodiment, the antenna elements of the antenna array AA may be arranged in the first plane and the antenna elements of the further antenna array may be arranged in the second plane and the angular degree between the first plane and the second plane may be preferably exactly 90 degree, approximately 90 degree or in a range between 75 degree and 105 degree.

The vehicle VEH may further contain an on-board camera CAM, which is preferably arranged at a bottom part of the casing of the vehicle VEH, when the vehicle is a helicopter as shown in Figure 1. The on-board camera CAM may be used for obtaining a life recording image of a local area of the Earth's surface, which is located below or in front of the vehicle VEH.

The position finding apparatus PFA contains at least a functional unit of a base station of a radio communication system for performing a registration procedure with the mobile station MS. This means, that the position finding apparatus PFA preferably does not contain all features of a conventional base station. Alternatively, the position finding apparatus PFA may contain further features or all features of a conventional base station such as a further functional unit for requesting a location update from the mobile station MS and/or an even further functional unit for transmitting a text message by the so-called SMS (SMS = Short Message Service) to the mobile station MS.

The position finding apparatus PFA may be a standalone electronic device or may be for example part of a so-called IMSI-catcher.

Preferably, the functional unit for performing the registration procedure may be adapted to perform the registration procedure according to two or more radio communication standards such as one or several of the 3GPP standards (3GPP = 3rd Generation Partnership Project) like for example GSM/GPRS (GSM = Global System for Mobile Communication, GPRS = General Packet Radio Service), UMTS/HSPA (UMTS = Universal Mobile Telecommunication Systems, HSPA = High Speed Packet Access), LTE (LTE = Long Term Evolution), or LTE Advanced and/or one or several of the 3GPP2 standards (3GPP2 = 3rd Generation Partnership Project 2) and/or one or several of the WiMAX standards (WiMAX = Worldwide Interoperability for Microwave Access) and/or one or several of the IEEE WLAN standards (WLAN = Wireless Local Area Network) like for example IEEE 802.11, IEEE 802.11g, IEEE 802.11n etc.

When the person PER is located in the local area without coverage by a radio communication system or when the local area is a so-called dead spot or dead zone, the mobile station MS periodically searches for available base stations as long as the rechargeable battery has enough electrical power for operating a transceiver or transmitter of the mobile station MS. A rescue team or a rescue person, who uses the vehicle VEH, may scan an area, where the missed person might be located. Thereby, the position finding apparatus PFA imitates a conventional base station and preferably may imitate in an alternating way several conventional base stations of different types of radio access technologies as described above. The imitation of a conventional base station may be performed by transmitting downlink radio frequency signals via conventional radio channels such as the BCCH (BCCH = Broadcast Channel), which allow the mobile station MS to synchronize to the position finding apparatus PFA and to transmit a conventional request message for starting and performing a conventional registration procedure between the position finding apparatus PFA and the mobile station MS. When the mobile station MS has been registered at a virtual radio communication system imitated or mimicked by the position finding apparatus PFA, the mobile station MS preferably may switch into a so-called idle mode for saving electrical energy.

The position finding apparatus PFA may use uplink radio frequency signals, which are transmitted by the mobile station MS, for measuring a receiving direction RD of the uplink radio frequency signals at a single geographical location of the position finding apparatus PFA. The uplink radio frequency signals may be for example belong to uplink registration messages, which are transmitted from the mobile station MS to the position finding apparatus PFA during the registration procedure.

According to an alternative embodiment, the uplink radio frequency signals may belong to a location update message after the registration procedure has been finished. The location update message may be transmitted from the mobile station MS to the position finding apparatus PFA, when the position finding apparatus PFA has requested the mobile station MS to execute a location update. Preferably, the position finding apparatus PFA may request each time a location update from the mobile station MS, when a new measurement of the receiving direction RD and determination of the position MS-POS of the mobile station MS should be done at the position finding apparatus PFA for a better or improved localization of the mobile station MS.

In a further alternative embodiment, the uplink radio frequency signals may belong to an acknowledgement message after the registration procedure has been finished. The acknowledgement may be transmitted from the mobile station MS to the position finding apparatus PFA, when the position finding apparatus PFA has send a text message by the SMS to the mobile station MS. Preferably, the position finding apparatus PFA may send each time a text message by the SMS to the mobile station MS, when a new measurement of the receiving direction RD and determination of the position MS-POS of the mobile station MS should be done at the position finding apparatus PFA for a better or improved localization of the mobile station MS.

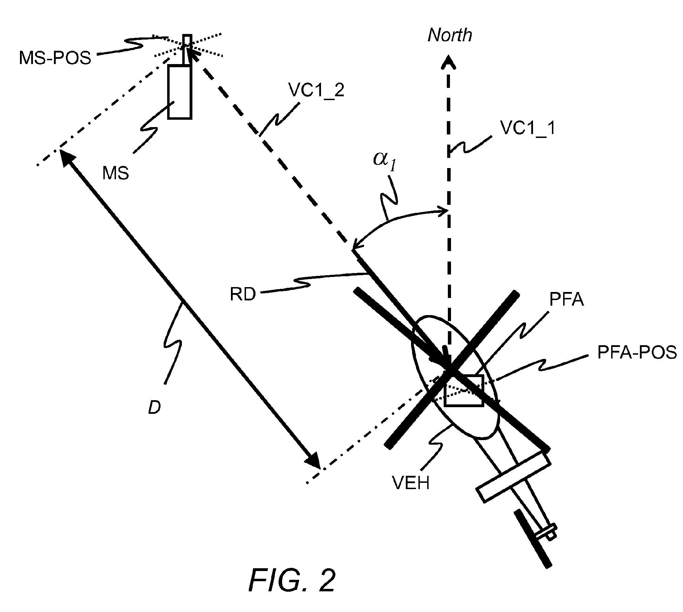

The position finding apparatus PFA may contain a determination unit, which is adapted to determine two or more spatial parameters of a spatial relationship between the position finding apparatus PFA and the mobile station MS using a single geographical location PFA-POS (see dotted cross at location of the antenna array AA in Figure 1) of the position finding apparatus PFA at which the uplink radio frequency signals have been received. This determination of the at least two spatial parameters is explained in more detail with respect to the Figures 2, 3, and 4.

The position finding apparatus PFA may use the determination unit or may contain a further determination unit for determining a geographical location MS-POS (see further dotted cross at location of the antenna of the mobile station MS in Figure 1) of the mobile station MS based on the at least two spatial parameters and further based on the single geographical location PFA-POS of the position finding apparatus PFA. This further determination of the geographical location MS-POS is also explained in more detail with respect to the Figure 2, 3, and 4.

The position finding apparatus PFA may further contain a display unit PFA-DU such as an LCD display or LED display. In an alternative embodiment, the display unit may be a separate device and may be connected to the position finding apparatus PFA.

The display unit PFA-DU may be adapted to display the life recording image as recorded by the camera CAM. According to an alternative embodiment, the display unit PFA-DU may be adapted to display a two-dimensional or three-dimensional digital map of the local area of the Earth's surface, which is below or in front of the vehicle VEH.

According to even further alternative embodiments, either the vehicle VEH or the position finding apparatus PFA may contain the display unit PFA-DU and a further display unit. The display unit PFA-DU may be adapted for displaying the life recording image and the further display unit may be applied for displaying the digital map.

In a further alternative embodiment, the position finding apparatus PFA may contain in addition to the display unit PFA-DU or instead of the display unit PFA-DU means for transmitting the geographical location MS-POS such as a radio transmitter or a radio transceiver. The means for transmitting the geographical location may be preferably applied, when the vehicle is an unmanned vehicle such as an unmanned aerial vehicle. The radio transmitter or the radio transceiver may be the same as applied for performing the registration procedure with the mobile station MS or may be an additional radio transmitter or an additional radio transceiver. The additional radio transmitter or radio transceiver may be adapted to transmit radio frequency signals for example in a lower MHz range below 100 MHz for obtaining a large operating distance between an operational area for the vehicle VEH and a residence of rescue personnel, which may be located in a stationary or mobile rescue coordination center.

Figure 2 shows schematically a spatial relationship between the mobile station MS and the position finding apparatus PFA by an azimuth angle $\alpha_1$ and a distance $D$ according to a first embodiment. The azimuth angle $\alpha_1$ is a so-called AOA (AOA = angle of arrival) and represents an angle between a vector VC1_1 which points from the position finding apparatus PFA towards the geographic North and a vector VC1_2 which points from the position finding apparatus PFA towards the mobile station MS. The distance $D$ represents a shortest length between the position finding apparatus PFA and the mobile station MS.

The distance $D$ may be determined for example in the following way: The mobile station MS may be for example a GSM cellular mobile phone. In GSM a so-called TA parameter (TA = timing advance) is used, which allows to control, when a GSM cellular mobile phone is allowed to transmit a burst of traffic within a timeslot to prevent collisions with adjacent GSM cellular mobile phones. The TA parameter may be for example an integer value between 0 and 63 with each value representing an advance of one bit period (approximately 3.69 microseconds). With radio waves travelling at about 300,000,000 meters per second the TA parameter changes for each length change between a GSM base station and the GSM cellular mobile phone of $d_{TA} = 550\ m$ with $d_{TA}$ being a TA length segment. The TA parameter is usually coded by 6 bits, which gives a theoretical maximum distance between the GSM base station and the GSM cellular mobile phone.

When the mobile station MS may be located in an area without network coverage by a cellular radio communication system, the position finding apparatus PFA may mimic a conventional base station of the cellular radio communication system. This means, the position finding apparatus PFA contains at least those functions of the conventional base station, which allows to perform a registration procedure between the mobile station MS and the position finding apparatus PFA. The position finding apparatus PFA further contains the TA functionality. When the position finding apparatus PFA determines a value for the TA parameter for the mobile station MS, the value of the TA parameter can be directly used as a measuring value for the distance $D$ between the mobile station MS and the position finding apparatus PFA. This means, the distance $D$ can be determined by the position finding apparatus PFA with an accuracy of $\pm 250$ meter.

An accuracy of the determination of the distance $D$ can be improved by utilizing or applying fractions of a symbol of the TA parameter such as quarter symbols. With respect to the example of the quarter symbols, a measurement of a point in time of so-called GSM time slot midambles is applied..

When alternatively the mobile station MS may be for example an UMTS cellular mobile phone or an LTE cellular mobile phone and the mobile station MS is operated with these radio access technologies, an accuracy of the determination of the distance $D$ may be much higher than compared with GSM because of an application of much higher symbol rates or chip rates by these radio access technologies.

The azimuth angle $\alpha_1$ may be determined for example in the following way:

The position finding apparatus PFA may contain an orientation sensor for determining an orientation parameter of the position finding apparatus PFA with respect to the geographic North N of the Earth's surface. The orientation sensor may be for example a compass, which measures precisely a local direction of the Earth's magnetic field and which outputs either a digital or analog signal proportional to its orientation. The orientation parameter may be for example an angle between a longitudinal axis of the vehicle VEH or the position finding apparatus PFA and a vector pointing to the magnetic North N of the Earth's surface. From the combination of the result of such a measurement and the knowledge of the local deviation between the magnetic and the geographical North direction, the geographical North direction can be derived. Such measurements and orientation sensors are well known to persons skilled in the art and therefore no further details need to be given.

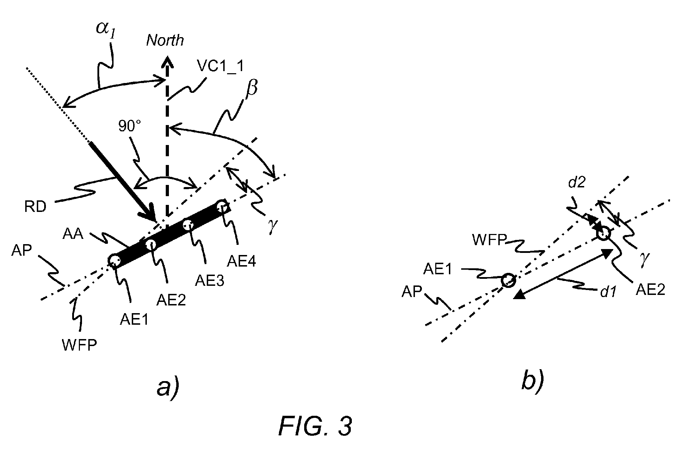

Figure 3 a) shows an enlarged area around the antenna array AA with angles $\alpha_1$, $\beta$ and $\gamma$, the receiving direction RD of the uplink radio frequency signals, the vector VC1_1 and an antenna plane AP, which contains for example four antenna elements AE1, AE2, AE3, AE4 of the antenna array AA. The angle $\beta$ may be defined as an angle between the vector VC1_1 and the antenna plane AP. A wave front plane WFP for the uplink radio frequency signals may be oriented perpendicular to the receiving direction RD. The angle $\gamma$ may be defined as an angle between the wave front plane WFP and the antenna plane AP.

A geometrical relationship for the three angles $\alpha_1$, $\beta$ and $\gamma$ can be given by following equation:

$$\alpha_1 + \beta = \gamma + 90° \qquad (1)$$

The azimuth angle $\alpha_1$ needs to be measured. The angle $\beta$ can be determining the direction from the position finding apparatus PFA to the magnetic North N of the Earth's surface as described above and by measuring a spatial orientation of the antenna plane AP. The spatial orientation of the antenna plane AP and thereby the angle $\beta$ can be measured for example by an electronic device, which may contain a compass or a gyroscope such as a fibre optic gyroscope or a vibrating structure gyroscope and which outputs a current value of the angle $\beta$. Such measurements and gyroscopes are well known to persons skilled in the art and therefore no further details need to be given.

A further geometrical relationship for a distance $d_1$ between two neighbored antenna elements AE1, AE2 of the antenna array AA, a distance $d2$ for a path difference for the uplink radio frequency signals between the two neighbored antenna elements AE1, AE2 and the angle $\gamma$ can be given by following equation (see Figure 3 b):

$$\cos \gamma = \frac{d2}{d1} \qquad (2)$$

Equation (2) can be transformed into:

$$\gamma = arccos\left(\frac{d2}{d1}\right) = arccos\left(\frac{\Delta t \cdot c}{d1}\right) \qquad (3)$$

with

$\Delta t$: propagation time difference between the two neighbored antenna elements AE1, AE2;
$C$: propagation velocity of the uplink radio frequency signals, about 300,000,000 meters per second.

With a substitution of $\gamma$ in equation (1) by equation (3) and a further transformation following equation for determining the azimuth angle $\alpha_1$ is obtained:

$$\alpha_1 = 90° + arccos\left(\frac{\Delta t \cdot c}{d1}\right) - \beta \qquad (4)$$

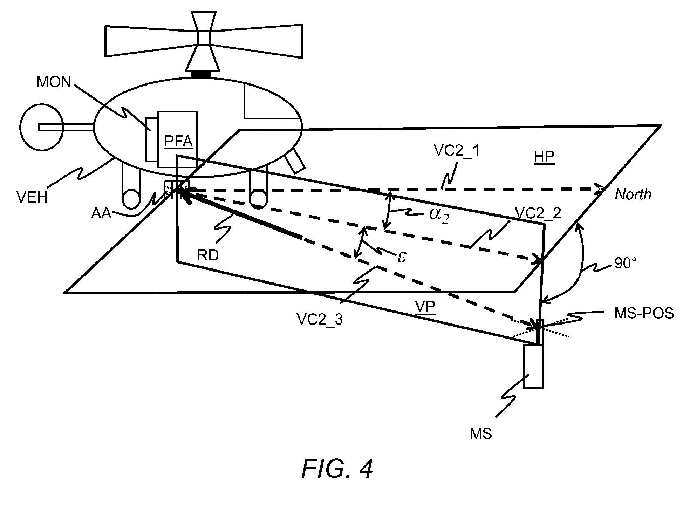

Figure 4 shows schematically a spatial relationship between the mobile station MS and the position finding apparatus PFA by an azimuth angle $\alpha_2$ and an elevation angle $\varepsilon$ according to a second embodiment. The azimuth angle $\alpha_2$ represents an angle between a vector VC2_1 which points from the position finding apparatus PFA within a horizontal plane HP towards the geographical North and a vector VC2_2 which points from the position finding apparatus PFA towards the mobile station MS within the horizontal plane HP with a shortest distance between the position finding apparatus PFA and the mobile station MS. The horizontal plane HP may be orientated locally in parallel to the Earth's surface by ignoring local roughness (e.g. by depressions, hills or mountains) of the Earth's surface.

The vector VC2_2 may represent an intersection line between the horizontal plane HP and a vertical plane VP, which may be orientated vertically to the Earth's surface. The elevation angle $\varepsilon$ represents an angle between the vector VC2_2 and a vector VC2_3 which points from the position finding apparatus PFA towards the mobile station MS within the vertical plane VP with a shortest distance between the position finding apparatus PFA and the mobile station MS.

The azimuth angle $\alpha_2$ and the elevation angle $\varepsilon$ may be determined for example in the following way:

At first, the antenna dipoles of the antenna elements of the antenna array AA may be get moved and aligned for example by an actuator or servomotor in such a way, that a propagation time difference between two neighbored antenna elements only depends on the azimuth angle $\alpha_2$. With respect to Figure 4, the antenna plane AP with the antenna dipoles may be get aligned perpendicular to the geographical North and the antenna dipoles may be get aligned vertically to the Earth's surface by ignoring local roughness (e.g. by depressions, hills or mountains) of the Earth's surface.

Then, the antenna array AA of the second type (see above) may be get rotated within the antenna plane AP between a measurement for the azimuth angle $\alpha_2$ and a further measurement for the elevation angle $\varepsilon$ by an angular range between 75° and 105° and preferably by 90° and get aligned in such a way, that a propagation time difference between two neighbored antenna elements only depends on the elevation angle E. With respect to Figure 4, the antenna plane AP with the antenna dipoles is kept aligned perpendicular to the geographical North and the antenna dipoles may be get aligned horizontally to the Earth's surface by ignoring local roughness (e.g. by depressions, hills or mountains) of the Earth's surface.

Alternatively, instead of the predefined vector VC2_1 a predefined vertical plane may be applied and instead of the predefined vector VC2_2 a predefined horizontal plane may be applied for determining the azimuth angle $\alpha_2$ and the elevation angle $\varepsilon$.

According to an alternative embodiment, the antenna array AA of the third type (see above) may be used for measuring the azimuth angle $\alpha_2$ by the first group of antenna elements and the elevation angle $\varepsilon$ by the second group of antenna elements. In such a case, a rotation of the antenna array AA is not necessary.

Both, the azimuth angle $\alpha_2$ and the elevation angle $\varepsilon$ may be determined for example in a same way as described above for the azimuth angle $\alpha_1$ with respect to the first embodiment. This means, that the receive direction RD of the uplink radio frequency signals as transmitted by the mobile station MS can be determined by a first measurement for the propagation time difference between the two neighbored antenna elements using a first orientation of the antenna array AA and by a second measurement for the propagation time difference between the two neighbored antenna elements using a second orientation of the antenna array AA, which is vertical to the first orientation.

Preferably, the position MS-POS of the mobile station MS may be determined as an absolute position by determining and calculating for example 2D or 3D Cartesian coordinates (2D = two dimensional, 3D = three dimensional) of the Earth's surface. The 2D Cartesian coordinates may be for example a longitude value and a latitude value. The 3D Cartesian coordinates may be for example a longitude value, a latitude value and a height value. Such coordinates may be determined for example in a following way: The position finding apparatus PFA or the vehicle VEH, which contains the position finding apparatus PFA, may contain a receiver for radio frequency signals, which are transmitted by a space-based satellite navigation system such as GPS (GPS = Global Positioning System), Russian GLONASS, European Union Galileo positioning system, Chinese Compass navigation system, or Indian Regional Navigational Satellite System. The receiver may determine and output the 2D/3D Cartesian coordinates for the position PFA-POS of the position finding apparatus PFA.

According to a first embodiment, the 2D Cartesian coordinates of the position PFA-POS of the position finding apparatus PFA, the distance $D$, and the azimuth angle $\alpha_1$ may be applied by the position finding apparatus PFA for determining, calculating or estimating for example a current longitude value $Lon_{MS}$ and a current latitude value $Lat_{MS}$ of the position MS-POS of the mobile station MS according to following equations:

$$Lat_{MS} = Lat_{PFA} + \Delta Lat \qquad (5)$$

$$Lon_{MS} = Lon_{PFA} + \Delta Lon \qquad (6)$$

with $Lat_{PFA}$ is the current latitude value of the position finding apparatus PFA, $\Delta Lat$ is a difference between the current latitude value $Lat_{PFA}$ of the position of the position finding apparatus PFA and the current latitude value $Lat_{MS}$ of the mobile station MS, $Lon_{PFA}$ is the current longitude value of the position finding apparatus PFA and $\Delta Lon$ is a difference between the current longitude value $Lon_{PFA}$ of the position finding apparatus PFA and the current longitude value $Lon_{MS}$ of the mobile station MS.

The parameters $\Delta Lat$ and $\Delta Lon$ may be calculated for example by applying following equations:

$$\Delta Lat = \frac{180°}{\pi} \cdot \frac{D}{R} \cdot \cos \alpha_1 \qquad (7)$$

$$\Delta Lat = \frac{180°}{\pi} \cdot \frac{D}{R} \cdot \frac{\sin \alpha_1}{\cos Lat_{PFA}} \qquad (8)$$

with $R$ is the radius of the Earth.

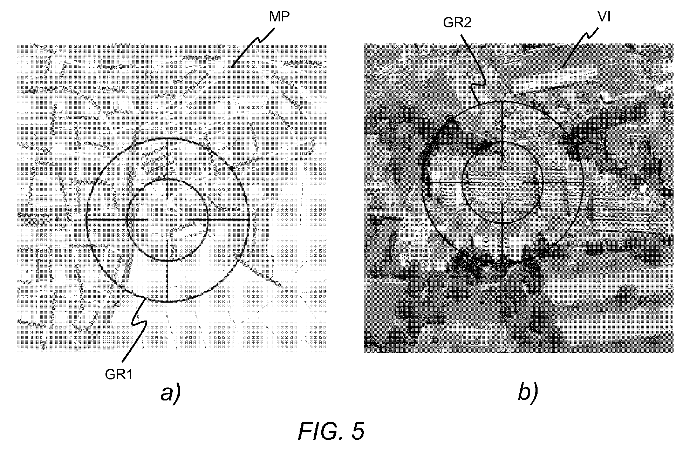

The position MS-POS of the mobile station MS may be applied by the position finding apparatus PFA for displaying on a monitor, display or screen a marker GR1 such as a graticule, reticle or cross line within a digital map MP (see Figure 5 a).

With regard to a second embodiment, the azimuth angle $\alpha_2$ and the elevation angle $\varepsilon$ may be applied by the position finding apparatus PFA for controlling an orientation of the on-board camera CAM. Preferably, the on-board camera CAM may be adjusted in such a way, that the main direction of incidence of the ambient light onto a light sensor of the on-board camera CAM such as a CCD (CCD = charge-coupled device), may be identical to the receive direction RD of the uplink radio frequency signals. The position MS-POS of the mobile station MS may be superimposed to an image of the on-board camera by using a marker GR2 such as a graticule, reticle or cross line and both, the position MS-POS of the mobile station MS and a video image VI of the Earth's surface may be displayed on a monitor, display or screen (see Figure 5 b).

In one alternative, when the main direction of incidence of the ambient light is permanently adjusted to be identical to the receive direction RD of the uplink radio frequency signals, the marker GR2 will be displayed in a centre of the video image VI. According to an alternative embodiment, the main direction of incidence of the ambient light may be adjusted to be identical to the receive direction RD of the uplink radio frequency signals with a larger time period, e.g. the main direction of incidence of the ambient light may be newly adjusted, when the marker GR2 has moved to the border of the video image VI.

When the mobile station MS is expected to be stationary, an accuracy of the determination of the position of the mobile station MS based on the first embodiment using the distance $D$ and the azimuth angle $\alpha_1$ or based on the second embodiment using the azimuth angle $\alpha_2$ and the elevation angle $\varepsilon$ may be further improved by several consecutive measurements at a same location of the position finding apparatus PFA by averaging position results of the consecutive measurements and by determining an averaged position of the mobile station MS.

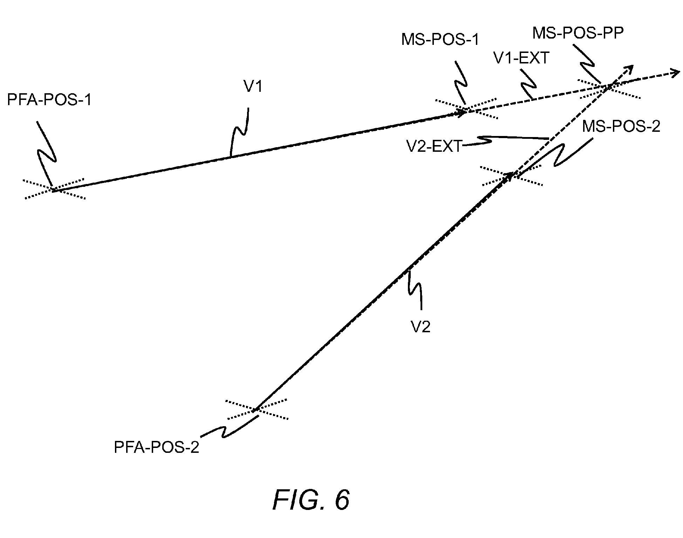

Preferably, the accuracy of the determination of the position of the mobile station MS based on the first embodiment using the distance $D$ and the azimuth angle $\alpha_1$ or based on the second embodiment using the azimuth angle $\alpha_2$ and the elevation angle $\varepsilon$ may be alternatively or additionally improved to $\pm 25\,m$ or below by a measurement at two or more than two different locations of the position finding apparatus PFA (see Figure 6).

For example by a first measurement, a first vector V1 and a first position MS-POS-1 of the mobile station MS may be determined at a first location PFA-POS-1 of the position finding apparatus PFA. The first vector V1 may be directed from the first location PFA-POS-1 of the position finding apparatus PFA to the first position PS-POS-1 of the mobile station MS. By a second measurement, a second vector V2 and a second position PS-POS-2 of the mobile station MS may be determined at a second location PFA-POS-2 of the position finding apparatus PFA. The second vector V2 may be directed from the second location PFA-POS-2 of the position finding apparatus PFA to the second position MS-POS-2 of the mobile station MS. When the first vector V1 and the second vector V2 don't directly intersect, the first vector V1 and/or the second vector V2 may be extended to enlarged vectors V1-EXT, V2-EXT for example by an algorithm executed by the position finding apparatus PFA as long as an intersection point INT-PT between the first enlarged vector V1-EXT and the second enlarged vector V2-EXT is obtained. When no intersection point can be determined by the algorithm, a third measurement may be executed and a third vector may be determined and an intersection point either between the first vector and the third vector or between the second vector and the third vector may be determined (not shown in Figure 5 for simplification). This procedure may be repeated until at least one intersection point can be determined. The intersection point provides a more reliable precision position MS-POS-PP of the mobile station MS than obtained by a single measurement at a single location of the position finding apparatus PFA.

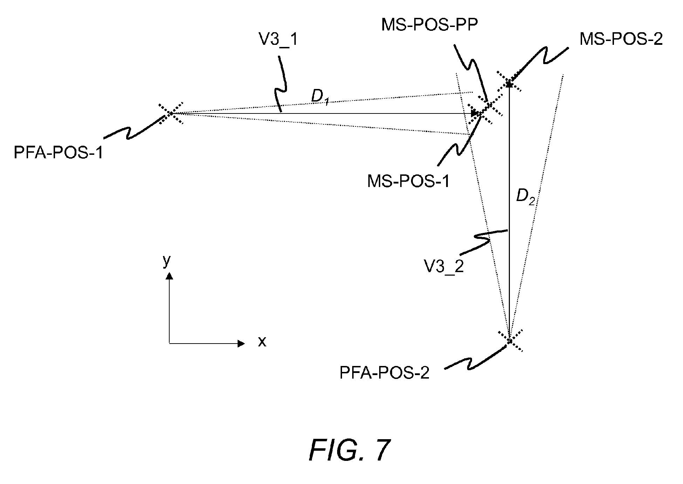

The accuracy of the determination of the position MS-POS-PP of the mobile station MS can be further increased by applying for example a weighted averaging of several or of all determined positions MS-POS-1, MS-POS-2 as described above according to following equation (see Figure 7):

$$P \begin{pmatrix} x \\ y \end{pmatrix} = \sum_i P_i \begin{pmatrix} \gamma_{x,i} x_i \\ \gamma_{y,i} y_i \end{pmatrix} \qquad (9)$$

with

$P \begin{pmatrix} x \\ y \end{pmatrix}$ position MS-POS-PP of the mobile station MS (weighted average),

$\Sigma_i \gamma_i = 1$ with $\gamma_i = f(\sigma_{\alpha,i}, \sigma_{D,i})$ being weighting factor of $i^{th}$ measurement as a function $f$ of standard deviation $\sigma_{\alpha,i}$ of the azimuth angle $\alpha_1$ of the $i^{th}$ measurement and of standard deviation $\sigma_{D,i}$ of the distance $D$ of the $i^{th}$ measurement.

Assuming that the weighting factors $\gamma_i$, $\gamma_j$ may be inversely proportional to errors $\Delta x_i$, $\Delta x_j$ of corresponding Cartesian coordinates $x, y$ following equations may be obtained:

$$\frac{\gamma_{x,i}}{\gamma_{x,j}} = \frac{\Delta x_j}{\Delta x_i} \quad \text{and} \quad \frac{\gamma_{y,i}}{\gamma_{y,j}} = \frac{\Delta y_j}{\Delta y_i}$$

$$\Delta x_i = D_i \sigma_{\alpha,i} \sin \alpha_i + \sigma_{D,i} \cos \alpha_i \qquad (10)$$

$$\Delta y_i = D_i \sigma_{\alpha,i} \cos \alpha_i + \sigma_{D,i} \sin \alpha_i$$

Further assuming that it is equally likely that the position MS-POS-1, MS-POS-2 of the mobile station MS is anywhere within the TA segment length $d_{TA}$ the standard deviation $\sigma_D$ may be:

$$\sigma_D = \sigma_{D,i} = \sigma_{D,j} = \frac{d_{TA}}{e} \qquad (11)$$

with $e$ being the Euler constant.

Further assuming two measurements with vectors V3_1, V3_2 being perpendicular to each other and measured at a first position PFA-POS-1 of the position finding apparatus PFA with $M_1 = \begin{pmatrix} 1100 \\ 0 \end{pmatrix}$ and at a second position PFA-POS-2 of the position finding apparatus PFA with $M_2 = \begin{pmatrix} 0 \\ 900 \end{pmatrix}$ (length unit for both positions PFA-POS-1, PFA-POS-2 may be "meter" for example), further assuming $d_{TA}$ = 400 $m$, further assuming $\alpha_1$ = 4°, $\alpha_2$ = 8° and further assuming equal distances $D_1 = D_2$ = 1000 $m$ following measurement results may be obtained:

$$\Delta x_1 = D_1 \sigma_{\alpha,1} \sin \alpha_1 + \sigma_{D,1} \cos \alpha_1 \approx 70\ m$$

$$\Delta x_2 = D_2 \sigma_{\alpha,2} \sin \alpha_2 + \sigma_{D,2} \cos \alpha_2 \approx 147\ m$$

$$\Delta y_1 = D_1 \sigma_{\alpha,1} \cos \alpha_1 + \sigma_{D,1} \sin \alpha_1 \approx 10\ m$$

$$\Delta y_2 = D_2 \sigma_{\alpha,2} \cos \alpha_2 + \sigma_{D,2} \sin \alpha_2 \approx 140\ m \qquad (12)$$

$$\frac{\gamma_{x,1}}{\gamma_{x,2}} = \frac{\Delta x_2}{\Delta x_1} \quad \text{and} \quad \frac{\gamma_{y,1}}{\gamma_{y,2}} = \frac{\Delta y_2}{\Delta y_1}$$

$$\frac{\Delta x_2}{\Delta x_1} \gamma_{x,2} + \gamma_{x,2} = 1 \Rightarrow \gamma_{x,2} = \frac{\Delta x_1}{\Delta x_1 + \Delta x_2} \approx 0.32 \quad \text{and} \quad \gamma_{x,1} \approx 0.68$$

$$\frac{\Delta y_2}{\Delta y_1} \gamma_{y,2} + \gamma_{y,2} = 1 \Rightarrow \gamma_{y,2} = \frac{\Delta y_1}{\Delta y_1 + \Delta y_2} \approx 0.93 \quad \text{and} \quad \gamma_{y,1} \approx 0.07$$

Then, following result for the position MS-POS-PP of the mobile station MS may be obtained:

$$P_1 = M_1 + \begin{pmatrix} 0 \\ D_1 \end{pmatrix} = \begin{pmatrix} 1100 \\ 1000 \end{pmatrix}$$

$$P_2 = M_2 + \begin{pmatrix} D_2 \\ 0 \end{pmatrix} = \begin{pmatrix} 1000 \\ 900 \end{pmatrix} \qquad (13)$$

$$P \begin{pmatrix} x \\ y \end{pmatrix} = \begin{pmatrix} 0.68 \cdot 1100 \\ 0.07 \cdot 1000 \end{pmatrix} + \begin{pmatrix} 0.32 \cdot 1000 \\ 0.93 \cdot 900 \end{pmatrix} \approx \begin{pmatrix} 1032 \\ 907 \end{pmatrix}$$

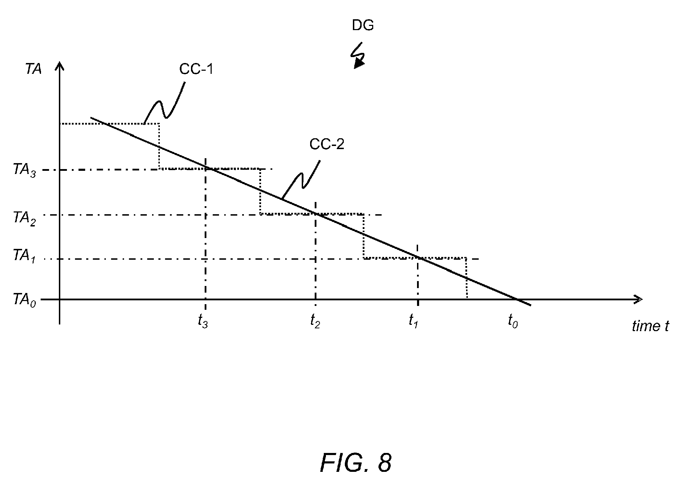

Figure 8 shows a further embodiment for increasing an accuracy of the distance $D$ by executing measurements at different locations of the position finding apparatus PFA. The mobile station MS may be expected to be stationary or quasi-stationary. Quasi-stationary means that a velocity of the mobile station MS may be negligible in comparison to a velocity of the position finding apparatus PFA (e.g. the position finding apparatus PFA may be located in a flying aircraft such as a helicopter). The position finding apparatus PFA may move with a constant approach velocity to an assumed position MS-POS of the mobile station MS. Constant approach velocity means that a vector component of a velocity vector of the position finding apparatus PFA, which is directed towards the assumed position MS-POS of the mobile station MS is constant. Measured TA parameters may be plotted by a first characteristic curve CC-1 versus time (see dotted line in the diagram DG of Figure 8). For a velocity of the position finding apparatus PFA of for example 80 km/h and a measurement period of the TA parameters of for example 1 second (e.g. one silent message is sent per second to the mobile station MS) about 25 measuring points may be obtained per change of the TA parameter. For each measured TA parameter $TA_3, TA_2, TA_1$ the position finding apparatus PFA may assume an effective distance $D_{eff,i}(i =$ 1,2,3, ...) between the position finding apparatus PFA and the mobile station MS for a central position $t_3, t_2, t_1$ of all measuring points of the respective TA parameter (see Figure 8). When two or more of such central positions $t_3, t_2, t_1$ have been determined, the position finding apparatus PFA may extrapolate (see second characteristic curve CC-2) a time value $t_0$ for the TA parameter $TA_0$. The time value $t_0$ is the point in time, when the position finding apparatus PFA may receive at the position MS-POS of the mobile station MS. Based on a current time value $t_c$, a current position $\vec{L}(x_c, y_c)$ of the position finding apparatus PFA, the time value $t_0$, and a current velocity vector $\vec{v}_c$ towards the position of the mobile station MS, the position finding apparatus PFA may calculate a position $\vec{P}(x, y)$ of the mobile station MS for example by applying following equation:

$$\vec{P}(x, y) = \vec{L}(x_c, y_c) + \vec{v_c}(t_0 - t_c) \qquad (6)$$

An accuracy for determining the position MS-POS of the mobile station MS may be further increased, when two or more position finding apparatuses are applied at different locations and when a TDOA parameter (TDOA = time difference to arrival) is measured at each position finding apparatus and when these TDOA parameters are converted to corresponding distances between the mobile station MS and the corresponding position finding apparatuses.

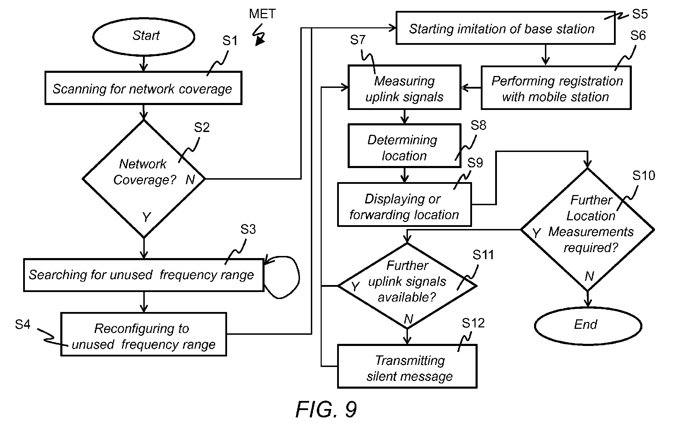

Figure 9 shows a flow diagram of a method MET, which is executed or performed by the position finding apparatus PFA for detecting the location MS-POS of the mobile station MS. The number of the steps for performing the method MET is not critical, and as can be understood by those skilled in the art that the number of the steps and the sequence of the steps may vary without departing from the scope of the embodiments of the invention as defined in the appended claims.

The method MET may be started for example when the position finding apparatus PFA has been moved to a search area, in which a missed user of the mobile station MS is supposed to reside.

In a first step S1, a single receiver or several receivers for different radio access technologies scan(s) for any downlink radio frequency signals, which are transmitted by one base station or several base stations of one radio communication system or several radio communication systems. The single receiver or the several receivers may scan step-by-step all frequency ranges, which are supported by a single transmitter or several transmitters of the position finding apparatus PFA for communication with the mobile station MS.

In a further step S2, a control unit of the position finding apparatus PFA may verify, whether any radio communication system has network coverage in the search area. When no network coverage has been detected in the search area, step S5 may be a next step. When else at least one base station of a radio communication system has been detected in the search area step S3 may be a next step.

In the next step S3, the single receiver or the several receivers may search for any unused frequency ranges, which may be applied by the position finding apparatus PFA for imitating or mimicking a base station. Preferably, all the frequency ranges, which are supported by a single transmitter or several transmitters of the position finding apparatus PFA for imitating or mimicking a base station, may be scanned step-by-step. If no unused frequency range has been found during a first overall scan, the scanning procedure may be repeated until at least one unused frequency range has been found, which can be applied for imitating or mimicking the base station.

In a further step S4 when at least one unused frequency range has been found, the control unit of the position finding apparatus PFA may select one of the at least one unused frequency range to be used for imitating or mimicking a base station and therefore may reconfigure a transceiver or a transmitter/receiver pair of the position finding apparatus PFA to the selected unused frequency range. The reconfiguration may include for example a frequency band adaptation and/or a protocol stack adaptation to a radio access technology, which is applied for the selected unused frequency range.

By the further step S5, the position finding apparatus PFA may start to imitate or mimic a base station of a virtual radio communication system. For providing the virtual radio communication system, the position finding apparatus PFA may contain for example a computer program product, which is adapted to simulate one or several network nodes of a radio communication system such as an MSC (MSC = Mobile Switching Center), a VLR (VLR = visitor location register) and a HLR (HLR = home location register).

The position finding apparatus PFA starts to transmit broadcast channels or shared channels of a radio access technology, which fits to the selected (unused) frequency range. In case of GSM, the position finding apparatus PFA transmits for example the BCCH.

The mobile station MS, which may repeatedly scan and search for any radio communication network to connect to, now is able to receive downlink radio frequency signals, which are transmitted by the position finding apparatus PFA.

In a further step S6, the position finding apparatus PFA may execute or perform a registration procedure with the mobile station MS. In case of GSM, a so-called IMSI attach procedure (IMSI = International Mobile Subscriber Identity) may be executed. The IMSI attach procedure is basically described for example in document ETSI TS 100 530 V7.0.0 (1999-08) for the GSM network (here for the position finding apparatus PFA) and in document 3GPP TS 03.22 V8.7.0 (2002-08) for the mobile station MS. In further alternatives, the registration procedure may be executed according to another radio access technology such as WiMAX, CDMA2000, WLAN (IEEE 802.11) etc.

By a further step S7, the position finding apparatus PFA measures and analyzes spatial parameters of uplink radio frequency signals, which are transmitted by the mobile station MS as part of the registration procedure. The spatial parameters may be for example the distance $D$ and the azimuth angle $\alpha_1$ as described above with respect to the Figure 2 and the Figure 3. Alternatively, the spatial parameters may be the azimuth angle $\alpha_2$ and the elevation angle $\varepsilon$ as described above with respect to the Figure 4. The step S7 may be preferably executed in parallel to the step S6.

In a next step S8, the position finding apparatus PFA determines the position MS-POS of the mobile station MS according to one of the alternatives as described above with respect to the Figures 2 and 3 or the Figure 4. Preferably, the determination of the position MS-POS of the mobile station MS may be based on an average determination across a new single determination and several prior single determinations of the position MS-POS of the mobile station MS.

In a further step S9, the position finding apparatus PFA may display the position MS-POS of the mobile station MS according to one of the alternatives as described above with respect to the Figure 5. Alternatively, the position finding apparatus PFA may provide information of the position MS-POS of the mobile station MS to remote devices such as personal navigation assistants. A unicast message to a single remote device or a broadcast message to several remote devices may be sent. The remote devices may be installed in cars such as police cars or ambulance vehicles or the remote devices may be outdoor navigation devices, which are operated by a search team, which is searching for the mobile station MS by foot. The information of the position MS-POS of the mobile station MS may be for example Cartesian coordinates of one of the satellite navigation systems as described above.

In a next optional step S10, the position finding apparatus PFA may verify, whether further location measurements are required. When no further location measurements are required because additional location measurements may not increase an accuracy of the position MS-POS of the mobile station MS or because an operator of the position finding apparatus PFA may have touched for example a corresponding control panel, the method MET may end. When else further location measurements are required, step S11 may be a next step.

By a further step S11, the position finding apparatus PFA may verify, whether further uplink radio frequency signals are currently transmitted by the mobile station MS. When no further uplink radio frequency signals are currently transmitted the registration procedure may have been finished in the meantime and therefore step S12 may be performed as a next step. When else further uplink radio frequency signals are currently transmitted, the step S7 may be executed again.

By the further step S12, the position finding apparatus PFA transmits a so-called silent message such as a so-called silent SMS, a so-called stealth SMS or a so-called stealth ping to the mobile station MS. Such messages do not show up on a display, nor trigger any acoustical signal when received at the mobile station MS. The mobile station MS may respond to position finding apparatus PFA by transmitting further uplink radio frequency signals, which may contain for example the IMSI.

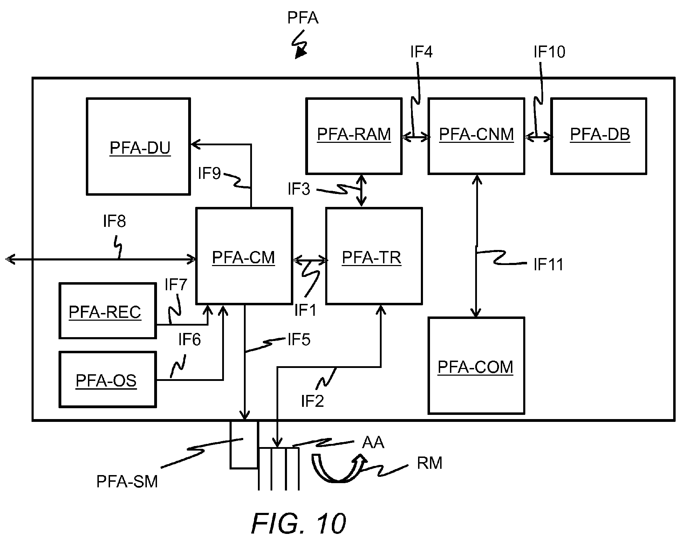

Figure 10 shows schematically a block diagram of the position finding apparatus PFA according to a preferred embodiment. A splitting of processing functions across processing units shown in Figure 10 is not critical, and as can be understood by those skilled in the art that the number of processing units, the number of processing functions, the number of interfaces and an allocation of the processing functions to the processing units may vary without departing from the scope of the embodiments of the invention as defined in the appended claims.

The position finding apparatus PFA may contain a controller module or processing unit PFA-CM as a main coordinating module of the position finding apparatus PFA. The controller module PFA-CM controls an interworking between functional units such as a radio transceiver PFA-TR, a radio access module PFA-RAM, a core network module PFA-CNM, a receiver PFA-REC for radio frequency signals transmitted by satellites of a satellite navigation system, a actuator or servomotor PFA-SM, an orientation sensor PFA-OS, a display unit PFA-DU, an antenna array AA etc. Some of the functional units such as the actuator or servomotor PFA-SM and the antenna array AA may be not parts of the position finding apparatus PFA and may be for example fastened to a cabin of a vehicle VEH such as the helicopter shown in the Figure 1.

The controller module PFA-CM may be operable to execute for example at least partly the steps S2, S4, S5, S8, S10 and S11 of the method MET.

When the position finding apparatus PFA is switched on, the controller module PFA-CM may instruct via interface IF1 the radio transceiver PFA-TR to make a scan for any network coverage by a radio communication system at a current location of the position finding apparatus PFA. The radio transceiver PFA-TR may transmit downlink radio frequency signals via an interface IF2 to the antenna array AA and may receive the uplink radio frequency signals from the antenna array AA also via the interface IF2.

The radio transceiver PFA-TR may be operable to execute for example at least partly the steps S1, S3, S4, S5, S6, S7 and S12 of the method MET.

When the radio transceiver PFA-TR may obtain from the controller module PFA-CM an instruction to start the imitation of a base station, the radio transceiver PFA-TR may get in contact with the radio access module PFA-RAM via an interface IF3. The radio access module PFA-RAM provides for example in case of GSM the functionality of a GSM radio access network for setting up a radio cell and for performing the registration procedure with the mobile station MS. This means, that the interface IF3 may provide corresponding functionality for example of the so-called Abis interface between a BTS (BTS = base transceiver station) and a BSC (BSC = base station controller).

The radio access module PFA-RAM may get in contact with the core network module PFA-CNM via an interface IF4. The core network module PFA-CNM may provide for example in case of GSM the functionality of a GSM core network for performing the registration procedure with the mobile station MS. This means, that the interface IF4 may provide corresponding functionality for example of the so-called A interface between the BSC and the MSC.

Measurement results obtained at the radio transceiver PFA-TR such as the TA parameter or the propagation time difference value $\Delta t$ may be provided from the radio transceiver PFA-TR via the interface IF1 to the controller module PFA-CM.

An orientation of the antenna array AA relative to the longitudinal axis of the vehicle VEH or of the position finding apparatus PFA may be controlled and adjusted by the controller module PFA-CM by transmitting corresponding signals via an interface IF5 to the actuator or servomotor PFA-SM, which may be able to rotate the antenna array AA along one rotation axis or along two rotation axes, which are vertical to each other. A rotary motion RM is indicated within the Figure 10.

The controller module PFA-CM may obtain the orientation parameter via an interface IF6 from the orientation sensor PFA-OS and may further obtain Cartesian coordinates of the Earth's surface via an interface IF7 from the receiver PFA-REC.

Based on the adjusted relative orientation of the antenna array AA, on the orientation parameter, on the Cartesian coordinates, the TA parameter and the propagation time difference value $\Delta t$ the controller module PFA-CM may be able to execute the step S8 of the method MET.

The controller module PFA-CM may further communicate via an interface IF8 with the external on-board camera CAM, which is sketched in Figure 1. Alternatively, the on-board camera CAM may be part of the position finding apparatus PFA (not shown in Figure 10 for simplification). The controller module PFA-CM may receive via the interface IF8 a life stream of pictures recorded by the on-board camera CAM and may control and adjust via the interface IF8 the orientation of the main direction of incidence of the ambient light onto the light sensor of the on-board camera CAM.

The controller module PFA-CM may further provide the determined position MS-POS of the mobile station MS via an interface IF9 to the display unit PFA-DU. Therefore, the controller module PFA-CM may transmit for example a life stream of pictures showing for example either the digital map and the position MS-POS of the mobile station MS by the marker GR1 (see Figure 5 a) or the life stream of pictures recorded by the on-board camera CAM and the position MS-POS of the mobile station MS by the marker GR2 (see Figure 5 b).

According to an alternative embodiment, the controller module PFA-CM may instruct the radio transceiver PFA-TR to transmit the information of the position MS-POS of the mobile station MS to the single remote device or the several remote devices.

The position finding apparatus PFA may further contain a database PFA-DB, which may be connected by an interface IF10 for example to the core network module PFA-CNM. The database PFA-DB may be for example a database similar to a database of an HLR but with information limited to the search purpose. Preferably, the database PFA-DB may be updated or may be initialized with data of a missed user or with data of a missed group of users at the beginning of a search for the missed user or the missed group of users. The data may be a mapping between user name, mailing address, IMSI and mobile phone number of the missed user or the missed group of users. Alternatively, when it is legally allowed, the database PFA-DB may provide for example a mapping between user name, mailing address, IMSI and mobile phone number of all users of a network of a mobile network operator or of all networks of mobile network operators in a country.

If for example the user name and the mailing address of a missed person is known, the position finding apparatus PFA may determine and obtain an IMSI and/or a mobile phone number from the database PFA-DB, which maps to the user name and the mailing address and the position finding apparatus PFA may only trigger by a registration procedure or by a silent message (see description above) a transmission of uplink radio frequency signals from a mobile station with an IMSI or mobile phone number, which maps to the obtained parameter (IMSI or mobile phone number).

In another scenario, when the position finding apparatus PFA may obtain an IMSI during the registration procedure with a mobile station of an unknown user, who may be buried for example by a collapsed building or by a avalanche, the position finding apparatus PFA may either obtain the user name and/or the mailing address of the unknown user via a remote connection for example to a central server of a mobile network operator or may compare the obtained IMSI with the data contained in the database PFA-DB to determine the user name and the mailing address of the unknown user, when these data are already available in the database PFA-DB.

The position finding apparatus PFA may further contain a communication module PFA-COM, which may be connected for example by an interface IF11 to the core network module PFA-CNM. The communication module PFA-COM may be for example a telephone earphone or a hands-free speakerphone based on an IP (IP = Internet Protocol) such as IPv4 or IPv6 or on ISDN (ISDN = Integrated Services Digital Network) and the interface IF11 may be for example an IP or ISDN interface. When the mobile phone number of a missed person is known, the mobile phone number may be used and input by speech (e.g. using the handsfree speakerphone) or by a keyboard interface for getting in contact with the missed person via the core network module PFA-CNM by a database query with the database PFA-DB and via further components of the position finding apparatus PFA such as the radio access module PFA-RAM, the radio transceiver PFA-TR and the antenna array AA.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for transmitting", "means for receiving", "means for determining" etc. (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, DSP hardware, network processor, ASIC, FPGA, read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that the method MET disclosed in the specification or in the claims may be implemented by a device having means for performing each of the respective steps of these methods. Preferably, a computer program product may contain computer-executable instructions for performing the method MET, when the computer program product is executed on a programmable hardware device such as a DSP, an ASIC or an FPGA. Preferably, a digital data storage device may encode a machine-executable program of instructions to perform the method MET.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. A position finding apparatus (PFA) for locating a mobile station (MS), said position finding apparatus (PFA) comprising:

   - a multiple antenna system (AA) for receiving at least one radio frequency signal from said mobile station (MS),
   - means (PFA-CM) for determining at a first position (PFA-POS) of said position finding apparatus (PFA) a position (MS-POS) of said mobile station (MS) by determining at least two spatial parameters of a spatial relationship between said position finding apparatus (PFA) and said mobile station (MS), and
   - means (PFA-TR) for transmitting information of said position (MS-POS) of said mobile station (MS) to at least one remote device and/or means (PFA-DU) for displaying said position (MS-POS) of said mobile station (MS) in reference to a visual presentation (MP, VP) of an environment surrounding said position (MS-POS) of said mobile station (MS).

2. Position finding apparatus (PFA) according to claim 1, wherein said means (PFA-CM) for determining said position (MS-POS) of said mobile station (MS) are adapted to determine by a first measurement an azimuth angle between a receive direction (RD) of said radio frequency signals and a predefined direction (VC2_1) or a predefined plane and by a second measurement an elevation angle between said receive direction (RD) of said radio frequency signals and a further predefined direction (VC2_2) or a further predefined plane and wherein said at least two spatial parameters are said azimuth angle and said elevation angle.

3. Position finding apparatus (PFA) according to claim 2, wherein said multiple antenna system (AA) comprises either of the following:

- a single antenna array rotatable to a first plane for measuring said azimuth angle and rotatable to a second plane different to said first plane for measuring said elevation angle and wherein an angle between said first plane and said second plane is between 75 and 105 angular degrees and preferably 90 angular degrees,
- a first antenna array comprising antenna elements in a first plane for measuring said azimuth angle and a second antenna array comprising further antenna elements in a second plane different to said first plane for measuring said elevation angle and wherein an angle between said first plane and said second plane is between 75 and 105 angular degrees and preferably 90 angular degrees.

4. Position finding apparatus (PFA) according to claim 2 or claim 3, wherein said visual presentation is a video image (VI) and wherein said position (MS-POS) of said mobile station (MS) is indicated by a marker (GR2) in said video image (VI).

5. Position finding apparatus (PFA) according to claim 1, wherein said multiple antenna system (AA) is adapted to determine by a first measurement an azimuth angle between a receive direction (RD) of said radio frequency signals and a predefined direction (VC1_1) and by a second measurement a distance between said position finding apparatus (PFA) and said mobile station (MS) and wherein said at least two spatial parameters are said azimuth angle and said distance.

6. Position finding apparatus (PFA) according to claim 5, wherein said means (PFA-CM) for determining said position (MS-POS) of said mobile station (MS) is adapted to determine said position (MS-POS) based on an extrapolation of an arrival time of said position finding apparatus (PFA) at said position (MS-POS).

7. Position finding apparatus (PFA) according to claim 5 or claim 6, wherein said visual presentation is a digital map (MP) and wherein said position (MS-POS) of said mobile station (MS) is indicated by a marker (GR1) in said digital map (MP).

8. Position finding apparatus (PFA) according to any of the preceding claims, wherein said means (PFA-CM) for determining said position (MS-POS) of said mobile station (MS) is adapted to determine at least a second position (MS-POS-2) of said mobile station (MS) at at least a second position (PFA-POS-2) of said position finding apparatus (PFA) and wherein a precision position (MS-POS-PP) of said mobile station (MS) is determined by an intersection point (INT-PT) of a first vector (V1) from said first position (PFA-POS) of said position finding apparatus (PFA) to said position (MS-POS) of said mobile station (MS) and of at least a second vector (V2) from said at least second position (PFA-POS-2) of said position finding apparatus (PFA) to said at least second position (MS-POS-2) of said mobile station (MS).

9. Position finding apparatus (PFA) according to any of the preceding claims, wherein said position finding apparatus (PFA) further comprises means (PFA-DB) for identifying a user of said mobile station (MS) and/or further comprises means (PFA-COM) for contacting said user of said mobile station (MS).

10. A vehicle (VEH) comprising a position finding apparatus (PFA) according to any of the preceding claims.

11. Vehicle (VEH) according to claim 10, wherein said vehicle (VEH) is a helicopter, an unmanned aerial vehicle, a boat, a car or a motorcycle.

**12.** A method (MET) for locating a mobile station (MS) by a position finding apparatus (PFA), said method (MET) comprising:

- receiving by a multiple antenna system (AA) at least one radio frequency signal from said mobile station (MS),
- determining (S8) at a first position of said position finding apparatus (PFA) a position (MS-POS) of said mobile station (MS) by determining at least two spatial parameters of a spatial relationship between said position finding apparatus (PFA) and said mobile station (MS), and
- transmitting (S9) information of said position (MS-POS) of said mobile station (MS) to at least one remote device and/or displaying (S9) said position (MS-POS) of said mobile station (MS) in reference to a visual presentation (MP, VP) of an environment surrounding said position (MS-POS) of said mobile station (MS).

**13.** A computer program having a program code for performing the method (MET) of claim 12, when the computer program is executed on a computer or processor.

FIG. 1

FIG. 2

FIG. 3

*FIG. 4*

FIG. 5

*FIG. 6*

*FIG. 7*

FIG. 8

MET

Start

S1

Scanning for network coverage

S2

Network Coverage? N

Y

S3

Searching for unused frequency range

S4

Reconfiguring to unused frequency range

Starting imitation of base station — S5

S7

Measuring uplink signals

S6

Performing registration with mobile station

S8

Determining location

S9

Displaying or forwarding location

S10

Further Location Measurements required?

Y

N

S11

Further uplink signals available?

Y

N

S12

Transmitting silent message

End

FIG. 9

FIG. 10

Europäisches
Patentamt

European
Patent Office

Office européen
des brevets

# EUROPEAN SEARCH REPORT

**Application Number**

EP 13 30 6345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/029558 A1 (LIU HANG [CA]) 12 February 2004 (2004-02-12) * paragraph [0022] - paragraph [0024] * * paragraphs [0040], [0046] - [0067]; figures 1,5,7-9 * | 1-13 | INV. H04W64/00 ADD. G01S5/04 |
| A | US 2003/117320 A1 (KIM EUNG-BAE [KR] ET AL) 26 June 2003 (2003-06-26) * abstract; figure 8 * * paragraphs [0010], [0032] * | 2,3,5,6,8 | |
| A | US 5 844 522 A (SHEFFER ELIEZER A [US] ET AL) 1 December 1998 (1998-12-01) * column 3, line 36 - line 65 * * column 17, line 28 - line 55 * | 2,3,5,6,8 | |
| A | WO 2010/045466 A2 (JADI INC [US]; SMID EDZKO [US]; STIGLICH TOM [US]; ATKINSON JERRY [US]) 22 April 2010 (2010-04-22) * paragraph [0042] - paragraph [0051] * | 1,12,13 | |
| | | | **TECHNICAL FIELDS SEARCHED (IPC)** H04W G01S |

The present search report has been drawn up for all claims

| Place of search | Date of completion of the search | Examiner |
|---|---|---|
| Munich | 5 February 2014 | Straniero, Roberto |

EPO FORM 1503 03.82 (P04C01)

**ANNEX TO THE EUROPEAN SEARCH REPORT
ON EUROPEAN PATENT APPLICATION NO.**

EP 13 30 6345

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2014

| Patent document cited in search report | | Publication date | Patent family member(s) | | Publication date |
|---|---|---|---|---|---|
| US 2004029558 | A1 | 12-02-2004 | NONE | | |
| US 2003117320 | A1 | 26-06-2003 | KR | 20030055412 A | 04-07-2003 |
| | | | US | 2003117320 A1 | 26-06-2003 |
| US 5844522 | A | 01-12-1998 | AU | 7396796 A | 30-04-1997 |
| | | | CA | 2234572 A1 | 17-04-1997 |
| | | | EP | 0855123 A1 | 29-07-1998 |
| | | | JP | H11513848 A | 24-11-1999 |
| | | | US | 5844522 A | 01-12-1998 |
| | | | WO | 9714257 A1 | 17-04-1997 |
| WO 2010045466 | A2 | 22-04-2010 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *ETSI TS 100 530 V7.0.0,* August 1999

- *3GPP TS 03.22 V8.7.0,* August 2002